# EUROPEAN PATENT APPLICATION

(11) **EP 1 863 154 A2**
(43) Date of publication of application: **05.12.2007**
(21) Application number: 07109327.2
(22) Date of filing: 31.05.2007
(51) Int. Cl.: H02K 21/24

(54) **Actuation system with redundant motor actuators**

(30) Priority: 02.06.2006 US 445876
(71) Applicant: Honeywell International Inc., Morristown, NJ 07962 (US)
(72) Inventor: Potter, Calvin C, Mesa, AZ 85206 (US); Wingett, Paul T., Mesa, AZ 85202-7471 (US); Hanlon, Casey, Queen Creek, AZ 85242 (US); Morris, John T., Tempe, AZ 85283 (US)
(74) Representative: Haley, Stephen

(57) **Abstract**

A multi-redundant motor (200) may be used to implement a relatively small, lightweight redundant actuator assembly package. The motor (200) is implemented as a brushless DC motor (200) and includes N-number of stators (202) and M-number of rotors (204). Each stator (202) has a plurality of independent stator coils (216) disposed thereon, and N is an integer greater than two. Each permanent magnet rotor (204) is disposed between, and is spaced axially apart from, two of the stators (202). Each rotor (204) has a plurality of magnetic dipoles (224) disposed thereon, and M is an integer equal to (N-1).

## Description

The present invention relates to actuation control systems, such as flight control surface actuation systems, to actuators, and to actuator motors and, more particularly, to a redundant motor for use therewith.

Aircraft typically include a plurality of flight control surfaces that, when controllably positioned, guide the movement of the aircraft from one destination to another. The number and type of flight control surfaces included in an aircraft may vary, but typically include both primary flight control surfaces and secondary flight control surfaces. The primary flight control surfaces are those that are used to control aircraft movement in the pitch, yaw, and roll axes, and the secondary flight control surfaces are those that are used to influence the lift or drag (or both) of the aircraft. Although some aircraft may include additional control surfaces, the primary flight control surfaces typically include a pair of elevators, a rudder, and a pair of ailerons, and the secondary flight control surfaces typically include a plurality of flaps, slats, and spoilers.

The positions of the aircraft flight control surfaces are typically controlled using a flight control surface actuation system. The flight control surface actuation system, in response to position commands that originate from either the flight crew or an aircraft autopilot, moves the aircraft flight control surfaces to the commanded positions. In most instances, this movement is effected via actuators that are coupled to the flight control surfaces. Though unlikely, it is postulated that a flight control surface actuator could become inoperable. Thus, some flight control surface actuation systems are implemented with a plurality of actuators coupled to a single flight control surface. In addition, or alternatively, the actuators may be implemented with redundant power drive units, such as two or more individual motors.

Although the flight control surface actuators that include two or more individual motors to provide redundancy are generally safe, reliable, and robust, these systems do suffer certain drawbacks. Namely, these actuators can be relatively complex, can involve the use of numerous parts, and can be relatively heavy.

Hence, there is a need for a flight control surface actuator that is less complex and/or uses less parts and/or is lighter than systems that use central drive units to drive the aircraft flap and slat actuators. The present invention addresses one or more of these needs.

The present invention provides a multi-redundant motor that may be used to implement a relatively small, lightweight redundant actuator assembly package.

In one embodiment, and by way of example only, a redundant brushless DC motor includes N-number of stators and M-number of rotors. Each stator has a plurality of independent stator coils disposed thereon, and N is an integer greater than two. Each permanent magnet rotor is disposed between, and spaced axially apart from, two of the stators, and has a plurality of magnetic dipoles disposed thereon. M is an integer equal to (N-1).

In another exemplary embodiment, a redundant actuator assembly includes an actuator configured to receive a rotational drive force the redundant brushless DC motor and is operable, upon receipt thereof, to move.

In yet another exemplary embodiment, a flight control surface actuation system includes a flight control surface actuator control circuit, a plurality of flight control surface actuators, and a plurality of redundant brushless DC motors. The flight control surface actuator control circuit is configured to supply DC excitation signals to the redundant brushless DC motors. Each flight control surface actuator coupled to receive a drive force from one of the redundant brushless DC motor and is operable, upon receipt thereof, to move a flight control surface to a position.

Other independent features and advantages of the preferred motor, actuator assembly, and flight control surface actuation system will become apparent from the following detailed description, taken in conjunction with the accompanying drawings which illustrate, by way of example, the principles of the invention.

### IN THE DRAWINGS

FIG. 1 is a schematic diagram of a portion of an exemplary aircraft depicting an exemplary embodiment of a flight control surface actuation system for aircraft flaps and slats;

FIG. 2 is a functional block diagram of a redundant actuator assembly that may be used in the system of FIG. 1, and that includes a redundant motor according to an embodiment of the present invention; and

FIG. 3 is an exploded view of a portion of an exemplary physical implementation of a redundant motor that may be used to implement the actuator assembly of FIG. 2.

The following detailed description of the invention is merely exemplary in nature and is not intended to limit the invention or the application and uses of the invention. Furthermore, there is no intention to be bound by any theory presented in the preceding background of the invention or the following detailed description of the invention. In this regard, before proceeding with the detailed description, it is to be appreciated that the described embodiment is not limited to use in conjunction with a specific vehicle or system. Thus, although the description is explicitly directed toward an embodiment that is implemented in an aircraft flight surface control system, it should be appreciated that it can be implemented in other vehicles and other actuation system designs, including those known now or hereafter in the art.

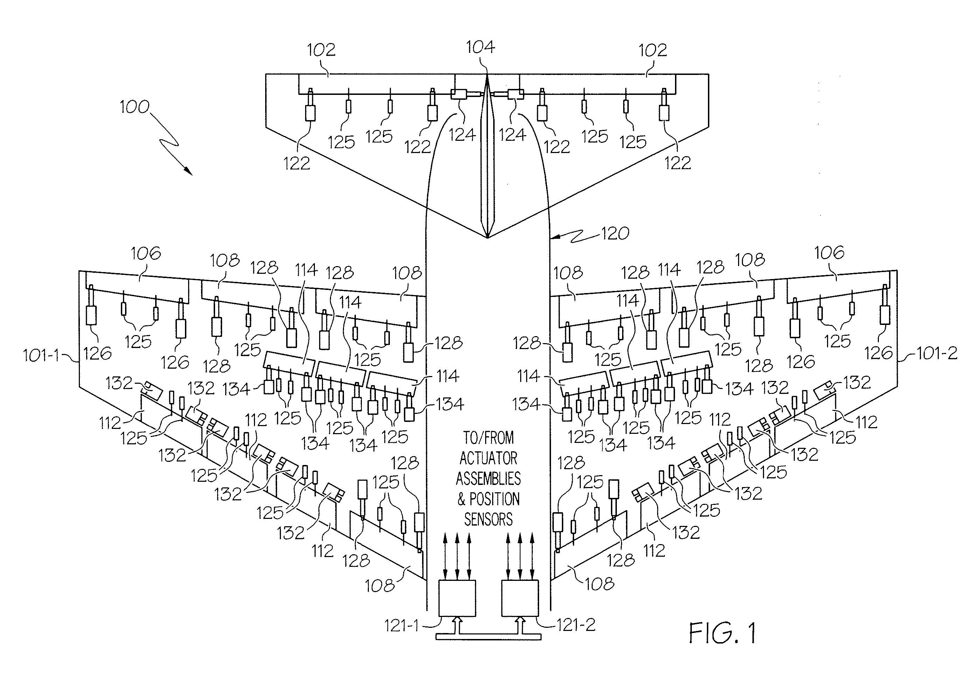

Turning first to FIG. 1, a schematic diagram of a portion of an exemplary aircraft and a portion of an exemplary flight control surface actuation system is shown. In the illustrated embodiment, the aircraft 100 includes first and second aircraft wings 101-1 and 101-2, respectively, a pair of elevators 102, a rudder 104, and a pair of ailerons 106, which are the primary flight control surfaces, and a plurality of flaps 108, slats 112, and spoilers 114, which are the secondary flight control surfaces. The primary flight control surfaces 102-106 control aircraft movements about the aircraft pitch, yaw, and roll axes. Specifically, the elevators 102 are used to control aircraft movement about the pitch axis, the rudder 104 is used to control aircraft movement about the yaw axis, and the ailerons 106 control aircraft movement about the roll axis. It is noted, however, that aircraft movement about the yaw axis can also be achieved either by varying the thrust levels from the engines on opposing sides of the aircraft 100. It will additionally be appreciated that the aircraft 100 could include horizontal stabilizers (not shown).

The secondary control surfaces 108-114, which are all disposed on the first and second aircraft wings 101-1, 101-2, influence the lift and drag of the aircraft 100. For example, during aircraft take-off and landing operations, when increased lift is desirable, the flaps 108 and slats 112 may be moved from retracted positions to extended positions. In the extended position, the flaps 108 increase both lift and drag, and enable the aircraft 100 to descend more steeply for a given airspeed, and also enable the aircraft 100 get airborne over a shorter distance. The slats 112, in the extended position, increase lift, and are typically used in conjunction with the flaps 108. The spoilers 114, on the other hand, reduce lift and when moved from retracted positions to extended positions, which is typically done during aircraft landing operations, may be used as air brakes to assist in slowing the aircraft 100.

The flight control surfaces 102-114 are moved to deployed positions via a flight control surface actuation system 120. The flight control surface actuation system 120 includes one or more actuator control units 121, a plurality of primary flight control surface actuators, which include elevator actuators 122, rudder actuators 124, and aileron actuators 126, and a plurality of secondary control surface actuators, which include flap actuators 128, slat actuators 132, and spoiler actuators 134. It will be appreciated that the number of actuator control units 121 may vary. However, in the depicted embodiment, the flight control surface actuation system 120 includes two multi-channel actuator control units 121 (121-1, 121-2).

The flight control surface actuation system 120 may be implemented using various numbers and types of flight control surface actuators 122-134. In addition, the number and type of flight control surface actuators 122-134 per flight control surface 102-114 may be varied. In the depicted embodiment, however, the system 120 is implemented such that two primary flight control surface actuators 122-126 are coupled to each primary flight control surface 102-16, and two secondary control surface actuators 128-134 are coupled to each secondary control surface 108-114. Moreover, each of the primary surface actuators 122-126, each of the flap actuators 128, and each of the spoiler actuators 134 are preferably a linear-type actuator, such as, for example, a ballscrew actuator, and each of the slat actuators 132 are preferably a rotary-type actuator. It will be appreciated that this number and type of flight control surface actuators 122-134 are merely exemplary of a particular embodiment, and that other numbers and types of actuators 122-134 could also be used.

The flight control surface actuation system 120 additionally includes a plurality of control surface position sensors 125. The control surface position sensors 125 sense the positions of the flight control surfaces 102-114 and supply control surface position feedback signals representative thereof. It will be appreciated that the control surface position sensors 125 may be implemented using any one of numerous types of sensors including, for example, linear variable differential transformers (LVDTs), rotary variable differential transformers (RVDTs), Hall effect sensors, resolvers, or potentiometers, just to name a few. In the depicted embodiment, a pair of control surface position sensors 125 is coupled to each of the flight control surfaces 102-114. It will be appreciated, however, that this is merely exemplary of a particular embodiment and that more or less than two position sensors 125 could be coupled to each flight control surface 102-114. Moreover, in other embodiments, the flight control surface actuation system 120 could be implemented without some, or all, of the control surface position sensors 125.

The system 120 and actuator control units 121-1, 121-2 may be implemented according to any one of numerous operational configurations. For example, the system 120 could be configured such that one of the control units 121-1 (121-2) is an active control unit, while the other control unit 121-2 (121-1) is in an inactive (or standby) mode. Alternatively, the system 120 could be configured such that both control units 121-1, 121-2 are active and controlling all, or selected ones, of the flight control surface actuator assemblies 122-134. No matter the specific configuration, each control unit 121-1, 121-2, when active, receives flight control surface position commands from one or more non-illustrated external systems, such as one or more flight control computers or pilot controls. In response to the flight control surface position commands, the active control units 121-1, 121-2 supply excitation signals to the appropriate flight control surface actuator assemblies 122-134.

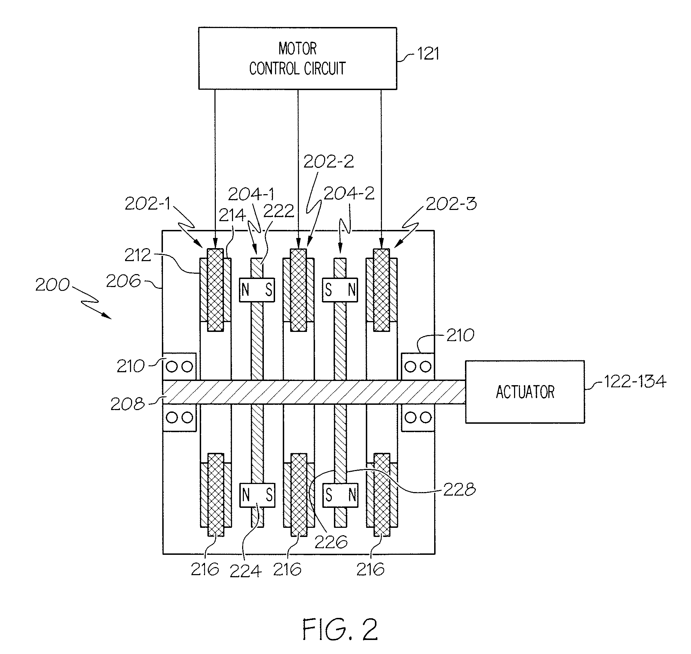

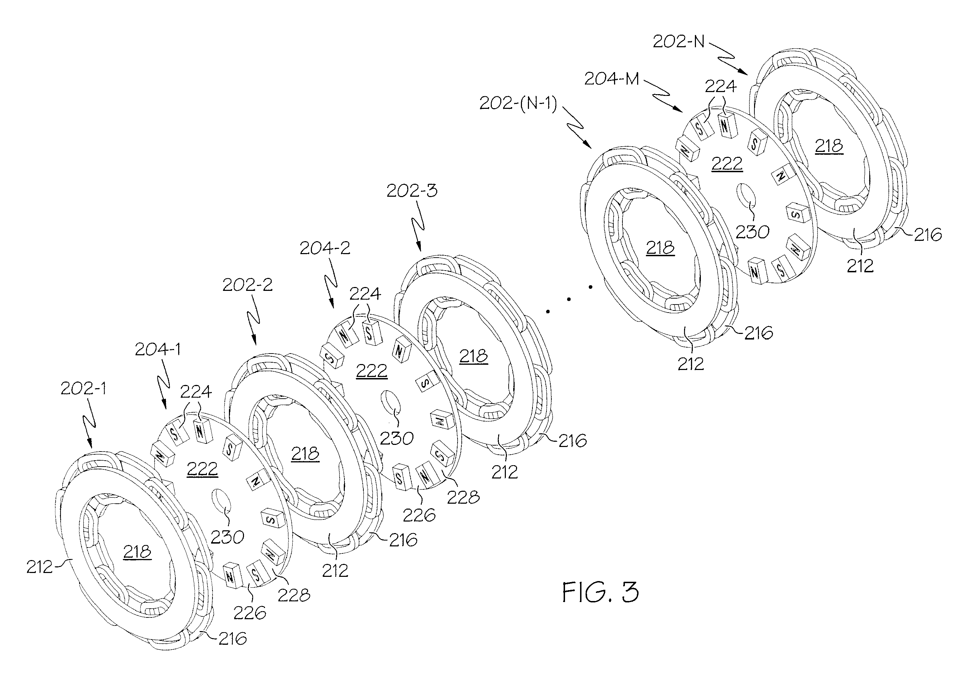

The flight control surface actuators 122-134 are each driven by a redundant brushless DC axial motor (not illustrated in FIG. 1). The actuator motors are selectively energized with the excitation signals supplied from the active control units 121-1, 121-2 and, upon being energized, rotate in one direction or another, to thereby supply a drive force to the associated actuator 122-134. The actuators 122-134 are each coupled to receive the drive force supplied from its associated actuator motor and, depending on the direction in which the actuator motors rotate, move to commanded positions, to thereby move the primary and secondary flight control surfaces 102-114 to the commanded flight control surface position. A functional block diagram of a redundant brushless DC axial motor 200 that may be used to drive one or more of the actuators 122-134 used in the system of FIG. 1 is depicted in FIG. 2, and an exploded view of portions of a particular actual physical implementation of the redundant motor 200 is shown in FIG. 3. With reference to each of these figures, the redundant motor 200 will now be described in more detail.

The redundant brushless DC axial motors 200 each include a plurality of stators 202 and a plurality of permanent magnet rotors 204 disposed within a motor housing 206. The permanent magnet rotors 204 are each disposed between, and spaced axially apart from, two of the stators 202, and are mounted on a shaft 208. The shaft 208 extends through each of the stators 202 and is rotationally mounted, via a plurality of bearing assemblies 210, within the motor housing 206. It will be appreciated that the number of stators 202 and permanent magnet rotors 204 that are used to implement the redundant motor 200 may vary. For example, in the embodiment depicted in FIG. 2, the motor includes three stators 202 (202-1, 202-2, 202-3) and two permanent magnet rotors 204 (204-1, 204-2). However, as shown most clearly in FIG. 3, the motor 200 could be implemented with N-number of stators 202 (202-1, 202-2, 202-3,... 202-N) and M-number of permanent magnet rotors (204-1, 204-2, 204-3,... 204-M), where N is an integer greater than two, and M is equal to N-1. With this relative number of stators 202 and permanent magnet rotors 204, each of the permanent magnet rotors 204 is disposed between two stators 202.

No matter the specific number of stators 202 and permanent magnet rotors 204 that are included in the motor 200, it is seen in FIGS. 2 and 3 that each stator 202 includes a pair of coil support structures 212, 214 and a plurality of stator coils 216. The coil support structures 212, 214 may be variously configured, but in the embodiment depicted in FIG. 3 the coil support structures 212, 214 are generally ringshaped, having a central opening 218 through which the motor shaft 208 passes. The support structures 212, 214 may additionally be constructed of any one of numerous types of magnetically permeable materials.

The stator coils 216 are disposed between each pair of support structures 212, 214. The stator coils 216 that make up each of the individual stators 202 are wound and electrically coupled together to form a three-phase stator 202. In a particular preferred embodiment, the stator coils 216 that make up each of the individual stators 202 are electrically coupled in a wye configuration. It will be appreciated that the particular configuration of the stator coils 216 that make up each stator 202 may vary depending, for example, on the number of rotor poles. In the embodiment depicted in FIG. 3, and as will now be described, the permanent magnet rotors 204 are each implemented with six rotor poles, and the stators coils 216 are each wound accordingly, using known stator winding techniques.

The permanent magnet rotors 204 each include a main body 222 and a plurality of magnetic dipoles 224. The main body 222 may be variously configured but in the embodiment depicted in FIG. 3 the main body 222 is at least substantially disk-shaped, having at least a first side 226, a second side 228, and a shaft mount opening 230. The permanent magnet rotors 204 are each mounted on the motor shaft 208 via the shaft mount openings 230, each of which preferably includes a spline feature to transmit torque to the motor shaft 208. The main bodies 222, similar to the coil support structures 212, 214 may additionally be constructed of any one of numerous types of magnetically permeable materials.

The plurality of magnetic dipoles 224 is preferably implemented by coupling a plurality of permanent magnets to each main body 222. It will be appreciated that the number of magnets 224 that are used may vary, but in the embodiment shown in FIG. 3, twelve magnets are used, thereby providing a 6-pole motor. As is also shown most clearly in FIG. 3, the magnets 224 are each evenly spaced radially around each of the main bodies 222. Each of the magnets 224 is also disposed such that its magnetic north pole (N) faces one of the stators 202 between which the main body 222 is disposed, and its magnetic south pole (S) faces the other stator 202 between which the main body 222 is disposed. In addition to this configuration, the plurality of magnets 224 on each main body 22 are arranged such that the magnetic poles facing each of the stators 202 between which the main body 222 is disposed alternate radially around the main body 202 between a magnetic north pole (N) and a magnetic south pole (S). Moreover, and as shown most clearly in FIG. 2, the plurality of magnets 224 on each of the main bodies 222 are axially aligned, and are arranged such that the axially aligned magnets 224 have like magnetic polarities facing an interposed stator 202. The reason for this arrangement is explained further below.

With the above-described motor 200 configuration, the stator coils 216 on each of the individual stators 202 may be selectively energized, using known brushless DC motor commutation techniques, to generate a rotating magnetic field. The rotor 204 (or rotors) that is (or are) adjacent the energized stator 202 will in turn rotate, and supply a rotational drive force, via the shaft 208, to the actuator 122-134 to which the motor 200 is coupled. As shown in FIG. 2, the motor control circuit 121, which in the depicted embodiment is the one of the actuator control units 121, is independently coupled to the stator coils 216 on each of the individual stators 202 and implements, among other functions, appropriate brushless DC motor commutation. It will be appreciated that the motor 200 and motor control circuit 121 may be configured to implement either sensorless or position feedback motor commutation techniques.

No matter the particular commutation technique that is employed, in a preferred embodiment, the motor control circuit 121 is configured to energize the coils 216 on only one of the stators 202 at a time. It will be appreciated, however, that the motor control circuit 121 could be configured to energize the coils 216 on more than one stator 202 at a time. It will additionally be appreciated that if a stator 202 that is disposed between two rotors 204, for example stator 202-2 in FIG. 2, is energized, both of the rotors 204 (e.g., 204-1, 204-2) adjacent this stator 202 (e.g., 202-2) will rotate and supply a rotational drive force. Moreover, because (N-2) of the stators 202 are interposed between two rotors 204, the axially aligned magnets 224 on the rotors 204 on either side of an interposed stator 202 have, as explained above, like magnetic polarities facing the interposed stator 202. This arrangement ensures that the torque generated on the two rotors 204 is not cancelled out.

The motor 200 described herein is a multi-redundant motor 200. The motor includes independent and segregated stator coils 216 and magnets 224. Preferably, the stator coils 216 are independently commutated, providing full electrical redundancy. The motor 200 that may be housed in single housing 206 and readily coupled to an actuator, providing a relatively small, lightweight redundant actuator assembly package, as compared to presently known redundant actuator assembly packages, which may include two or more individual motors.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A redundant brushless DC motor (200), comprising:
N-number of stators (202 (202-1, 202-2, 202-3 ...202-N)), each stator (202) having a plurality of independent stator coils (216) disposed thereon, N being an integer greater than two; and
M-number of permanent magnet rotors (204 (204-1,204-2, 204-3 ... 204-M)), each rotor (204) disposed between, and spaced axially apart from, two of the stators (202), each rotor (204) having a plurality of magnetic dipoles (224) disposed thereon, M being an integer equal to (N-1).

2. The motor (200) of Claim 1, further comprising:
a rotor shaft (208) coupled to each of the rotors (204) and configured for rotation,
wherein each stator (202) surrounds at least a portion of the rotor shaft (208).

3. The motor (200) of Claim 1, wherein each of the permanent magnet rotors (204) comprises:
a substantially disk-shaped main body (222) having at least a first side (226) and a second side (228), each of the first and second sides (226, 228) facing one of the stators (202); and
a plurality of magnets (224) coupled to, and evenly spaced radially around, the main body (222), each magnet (224) forming one of the magnetic dipoles (224) and including (i) a magnetic north pole facing one of the stators (202) between which the main body (222) is disposed and (ii) a magnetic south pole facing the other one of the stators (202) between which the main body (222) is disposed.

4. The motor (200) of Claim 3, wherein the magnets (224) are coupled to each main body (222) such that the magnetic poles facing each of the stators (202) between which the main body (222) is disposed alternate radially around the main body (222) between a north pole and a south pole.

5. The motor (200) of Claim 3, wherein:
at least (N-2) of the stators (202) are interposed between a first main body and a second main body;
each of the plurality of magnets (224) that is coupled to the first main body is axially aligned with one of the plurality of magnets (224) that is coupled to the second main body; and
each of the axially aligned magnets (224) are arranged such that like magnetic polarities face the interposed stator (202).

6. The motor (200) of Claim 1, wherein N is equal to three.

7. The motor (200) of Claim 1, wherein the stator coils (216) on each of the stators (202) are wound to form a three-phase motor (200).

8. A redundant actuator assembly, comprising:
an actuator (122-134) configured to receive a rotational drive force and operable, upon receipt thereof, to move; and
a brushless DC motor (200) coupled to the actuator (122-134), the motor (200) configured to be selectively energized and operable, upon being selectively energized, to supply the rotational drive force to the actuator (122-134), the brushless DC motor (200) including:
N-number of stators (202), each stator (202) having a plurality of independent stator coils (216) disposed thereon, each stator coil (216) configured to be selectively energized, and
M-number of permanent magnet rotors (204) coupled to the actuator (122-134), each rotor (204) disposed between, and spaced axially apart from, two of the stators (202), each rotor (204) having a plurality of magnetic dipoles (224) disposed thereon,
wherein N is an integer greater than two, and M is an integer equal to (N-1).

9. The actuator assembly of Claim 8, further comprising:
a rotor shaft (208) coupled between each of the rotors (204) and the actuator (122-134),
wherein each stator (202) surrounds at least a portion of the rotor shaft (208).

10. A flight control surface actuation system (120) , comprising:
a flight control surface actuator control circuit (121-1, 121-2)configured to supply DC excitation signals;
a plurality of flight control surface actuators (122-134), each flight control surface actuator (122-134) coupled to receive a drive force and operable, upon receipt thereof, to move a flight control surface to a position; and
a plurality of redundant brushless DC motors (200), each redundant brushless DC motor (200) coupled to a flight control surface actuator (122-134) and coupled to receive the DC excitation signals, each redundant brushless DC motor (200) operable, upon receipt of the DC excitation signals, to supply the drive force to a flight control surface actuator (122-134), each brushless DC motor (200) including:
N-number of stators (202), each stator (202) having a plurality of independent stator coils (216) disposed thereon, each stator coil (216) coupled to selectively receive the DC excitation signals, and
M-number of permanent magnet rotors (204) coupled to the actuator (122-134), each rotor (204) disposed between, and spaced axially apart from, two of the stators (202), each rotor (204) having a plurality of magnetic dipoles (224) disposed thereon,
wherein N is an integer greater than two, and M is an integer equal to (N-1).
